Europäisches Patentamt

European Patent Office

Office européen des brevets

(19)

(11) Publication number: **0 410 368 A2**

# EUROPEAN PATENT APPLICATION

(12)

(21) Application number: **90114138.2**

(22) Date of filing: **24.07.90**

(51) Int. Cl.5: **A43D 37/00**

(30) Priority: **28.07.89 IT 4166989**

(43) Date of publication of application:
**30.01.91 Bulletin 91/05**

(84) Designated Contracting States:
**DE ES FR**

(71) Applicant: **Calzaturificio F.lli DANIELI S.p.A.**
**Via Mazzini 20**
**I-31031 Caerano San Marco Treviso(IT)**

(72) Inventor: **Danieli, Diego**
**Via Beolco**
**I-31031 Caerano San Marco (Treviso)(IT)**
Inventor: **Piccolo, Nedo**
**Via Campagna Maser 10**
**I-31010 Maser (Treviso)(IT)**
Inventor: **Gatto Bruno**
**Via Unione 123**
**I-31050 Fanzolo (Treviso)(IT)**

(74) Representative: **Modiano, Guido et al**
**MODIANO, JOSIF, PISANTY & STAUB**
**Modiano & Associati Via Meravigli, 16 16 16**
**I-20123 Milano(IT)**

(54) **Machine for the roughing of uppers for items of footwear before the operation of injection-molding the sole.**

(57) The present invention relates to a machine for the roughing of uppers for items of footwear before the operation of injection-molding the sole. The machine comprises overturning means suitable for enclosing said upper fitted on a last (4) of the mold so as to leave unaffected the lower region and the region of the lateral profile to be roughed. A pair of tracer mills is rigidly associated with a movable support which can be moved away from and toward the upper. The mills are rigidly associated with guiding and translation means which move them so as to abrade, in combination, the entire profile of the upper which is left free by the means which enclose it.

Fig.1

EP 0 410 368 A2

# MACHINE FOR THE ROUGHING OF UPPERS FOR ITEMS OF FOOTWEAR BEFORE THE OPERATION OF INJECTION-MOLDING THE SOLE

The present invention relates to a machine for the roughing of uppers for items of footwear before the operation of injection-molding the sole.

It is known that before an upper fitted on a last is enclosed within a mold to inject its sole it is necessary to abrade the surface portion of the leather in order to allow the adhesion of the plastic material.

This operation, termed roughing, is currently performed manually by means of mills or roughing wheels.

This entails, besides the fact of having to assign personnel to this operation, the problem of having to perform the roughing exactly and entirely in the region which will subsequently be covered by the plastic material.

If all the part to be injection-molded is in fact not abraded, the sole may subsequently separate, whereas if one strays from the region to be injected, the abrasion in that region becomes visible on the finished product, which consequently must be discarded.

The principal aim of the present invention is to provide a machine which can perform the roughing of uppers for items of footwear, before the operation of injection-molding the sole, perfectly and exclusively on the region affected by molding.

A consequent primary object is to provide a roughing machine which performs the complete abrasion of the upper in the region to be associated with the injected sole.

Another important object is to eliminate the personnel currently assigned to the roughing operation.

Another important object is to accelerate the roughing operation, which is currently performed manually.

Still another object is to increase the production yield of the system for the injection-molding of soles.

Not least object is to provide a roughing machine which can be manufactured at low cost with conventional production systems.

This aim, these objects and others which will become apparent hereinafter are achieved by a machine for the roughing of uppers for items of footwear before the operation of injection-molding the sole, characterized in that it comprises overturning means adapted to enclose said upper fitted on the last, leaving free the lower region and the region of the lateral profile to be roughed, and at least one pair of tracer mills rigidly associated with a movable support which can be moved away from and toward said upper, said mills being rigidly associated with guiding and translation means suitable to make them abrade in combination the entire profile to be roughed.

Further characteristics and advantages will become apparent from the detailed description of an embodiment of the invention, illustrated only by way of non-limitative example in the accompanying drawings, wherein:

figure 1 is a side view of a first component of the machine according to the invention during the roughing operation;

figure 2 is an enlarged sectional side view of the component of figure 1;

figure 3 is a partially sectional top view of the component of figure 1;

figure 4 is an enlarged perspective detail view of one of the tracer mills with which the component of figure 1 is equipped;

figure 5 is a side view of a second component of the machine according to the invention during a first step of its operation;

figure 6 is a side view of the component of figure 5 during a second step of its operation;

figures 7, 8 and 9 are enlarged perspective views of various details of the second component of the machine according to the invention.

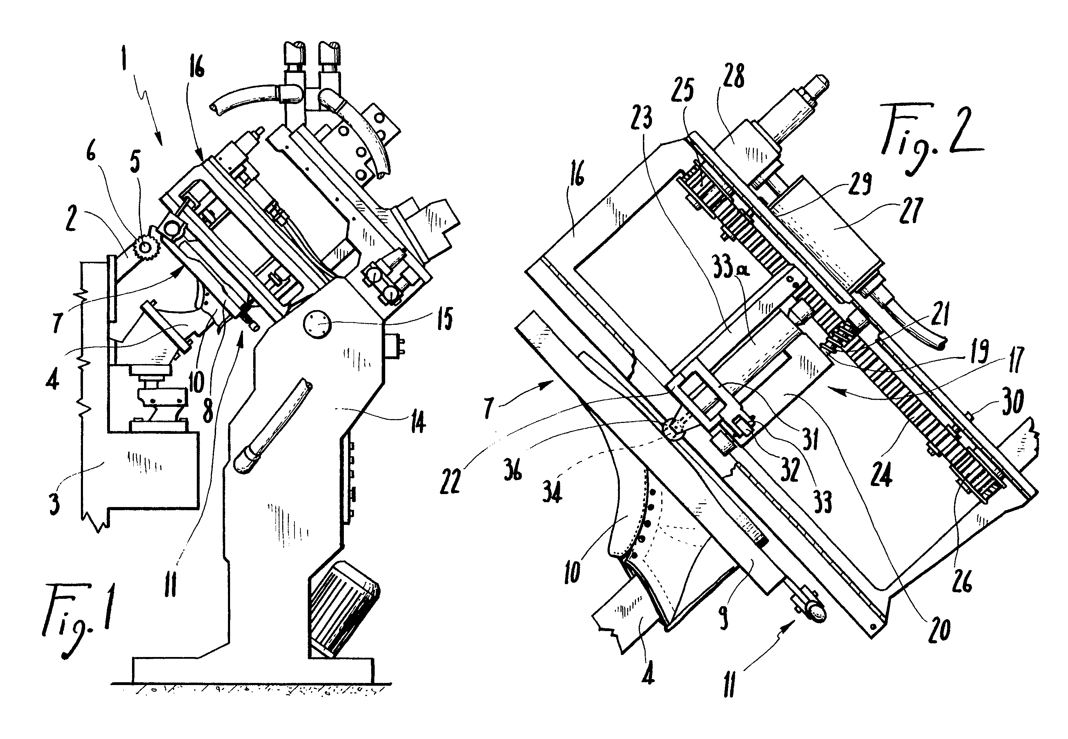

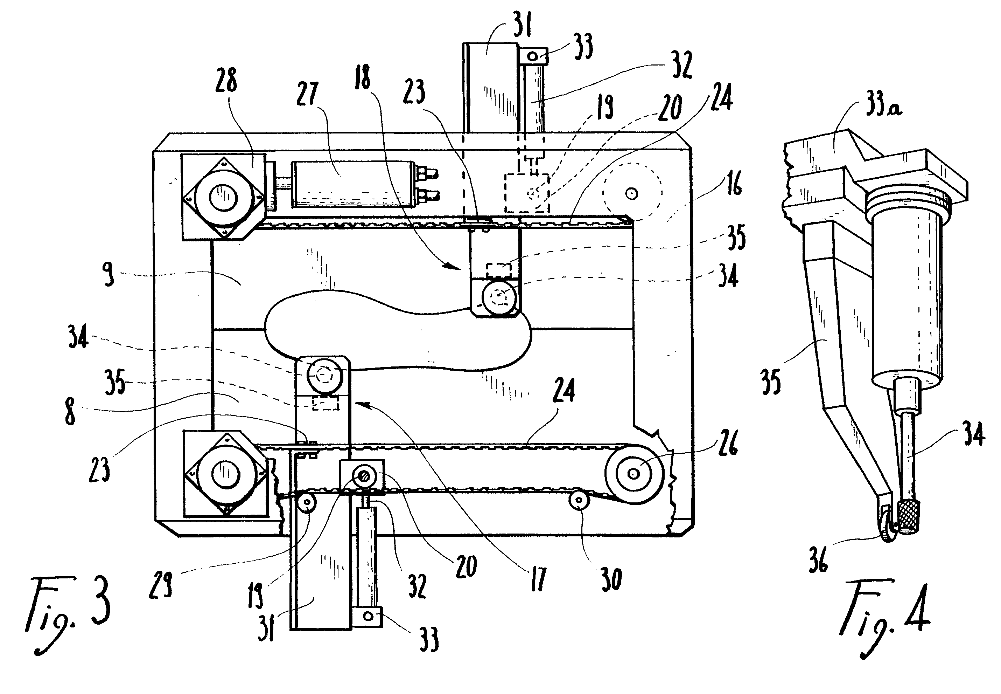

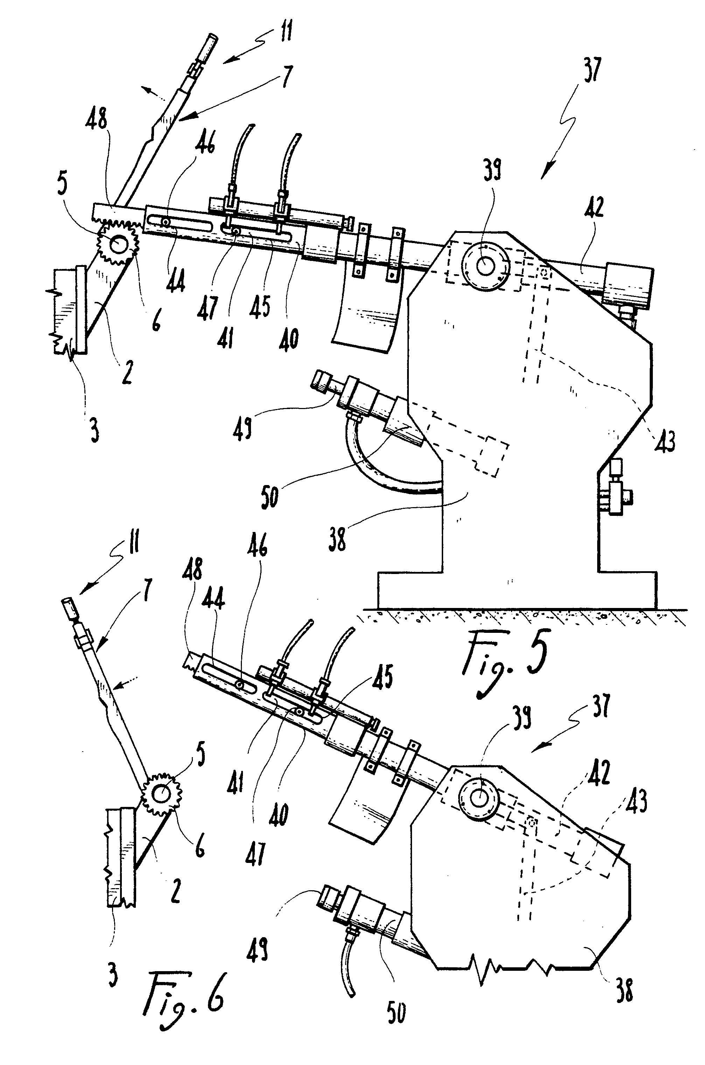

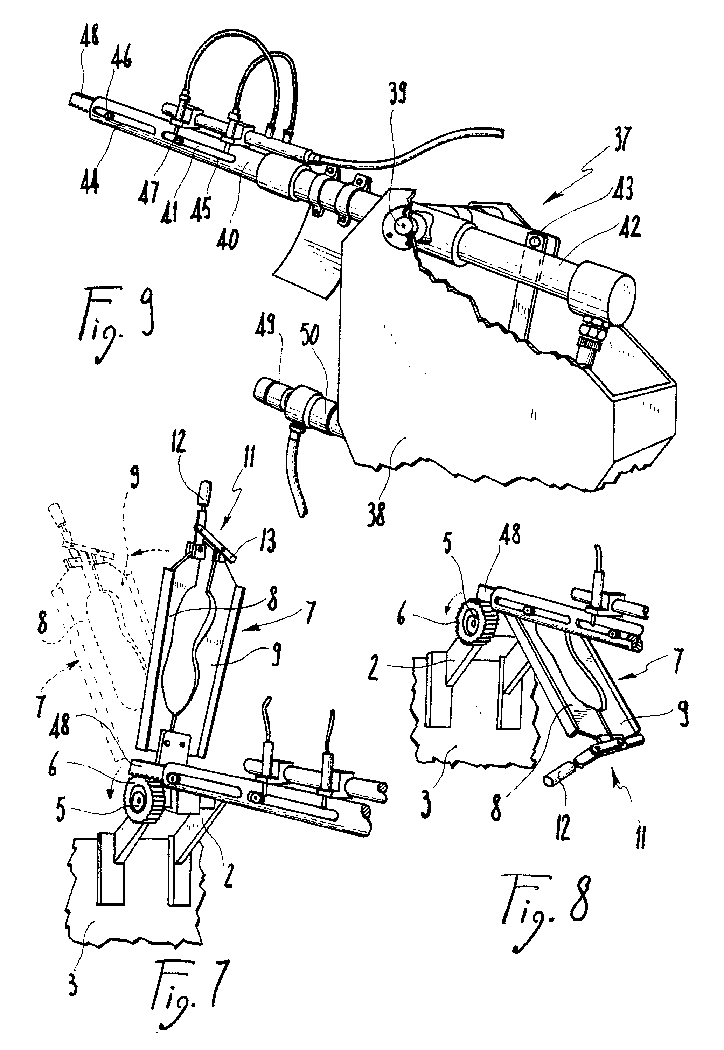

With reference to the above figures, a first component of the roughing machine according to the invention is generally indicated by the reference numeral 1 and comprises, at each last 4, a pivot 5 which is rigidly associated with a pinion 6 and is rotationally coupled to a support 2 which is fixed on a molding machine 3 which conveniently is of the rotary type.

A mask 7, substantially composed of two members defined by halves of a sole shape 8 and 9 which correspond to those of the mold, is rigidly associated with said pivot 5.

In particular, the two half sole shapes 8 and 9 are pivoted on said pivot 5 and can rotate in a plane which is parallel to the axis of said pivot 5 from a closed position, suitable for internally enclosing an upper 10 fitted on the last 4, leaving unaffected the lower region and the region of the lateral profile to be roughed, to an open position for the releasing of said upper.

The ends of said half sole shapes 8 and 9 which are opposite to the articulation ends are associated with an opening device 11 provided with a manual closure knob 12 on one side and with a release lever 13 on the other.

After release, the opening of the half sole shapes 8 and 9 occurs automatically due to a spring which is not illustrated.

Said first component 1 of the machine furthermore comprises a metal base 14 which is fixed with respect to the molding machine 3; the end of a substantially parallelepipedal metal frame 16 is articulated to an upper axis 15 of said base and can therefore be moved away from or toward the upper 10 through actuation by appropriate means which are not illustrated.

Two roughing carriages, respectively generally indicated by the reference numerals 17 and 18, are slidably associated within said metal frame 16 so that they can move in a direction which is parallel to the median plane of the last 4, in an arrangement which is substantially orthogonal to the position of said half sole shapes 8 and 9 which are closed around the upper 10, at the two sides thereof.

Each roughing carriage 17 or 18 comprises a small shaft 19 which is substantially orthogonal to said half sole shapes 8 and 9; a block 20 is slidably associated with said shaft and is pushed downward by a spring 21 which surrounds the upper part of said shaft 19.

Said block 20 is connected so as to slide orthogonally on a lower guide 22 which is orthogonal thereto and is in turn rigidly associated with an element 23 which is substantially parallel to the block 20 and is fixed, at the upper end, to a toothed belt 24 which is stretched between two pinions 25 and 26, the first of which is actuated by a motor 27 with a reduction gear 28, which are arranged above the frame 16.

Each belt 24, which is appropriately kept under tension by two belt tighteners 29 and 30, is arranged so as to allow said translational motion of the corresponding carriage 17 or 18.

A slider 31 is slidable on said guide 22 and is actuated by a fluid-actuated piston 32 which is parallel thereto and is rigidly associated between arms 33 and said block 20.

A support 33a is fixed on said slider 31 and supports, beneath it, a mill or roughing wheel 34 which rotates on an axis which is substantially orthogonal to said half sole shapes 8 and 9 and a tracer 35 which is arranged to the side of said mill and has a related rotary bearing 36 which is adapted to abut and roll along the surface of said half sole shapes 8 and 9 and is followed by the mill 34 in its axial movements.

A second component of the machine, generally indicated by the reference numeral 37, co-operates with said first component 1 and comprises a metal base 38 which is fixed with respect to the molding machine 3; the end of a tubular metal element 40 is articulated to an upper axis 39 of said base, and the stem 41 of a fluid-actuated piston 42, which is coaxial to the tubular element 40 and is arranged on the opposite side thereof with respect to the axis 39, is slidable within said tubular metal element 40.

The articulation of the tubular element 40 on the axis 39 is provided by means of a lever system 43 actuated by a fluid-actuated piston which is not illustrated.

Said tubular element 40 conveniently has two pairs of slotted holes, respectively 44 and 45, in which bolt elements 46 and 47 are guided and rigidly associate with the stem 41 a rack 48 which is arranged to the side of the tubular element 40 and has its teeth directed downward.

Said rack 48 is suitable for meshing, after a downward rotation of the tubular element 40, with said pinion 6 which is rigidly associated with said half sole shapes 8 and 9.

A fluid-actuated piston 49 is rigidly associated laterally to said base 38, and at the end of its stem 50 is suitable for releasing the opening device 11 by acting on the lever 13.

The operation of the machine is as follows: the two half sole shapes 8 and 9, which are lowered and closed manually on the last 4 which bears the upper 10, arrange themselves at the base 14 which bears the frame 16 upon the stepwise rotation of the molding machine 3.

At this point the lowering of the frame 16 causes the roughing carriages 17 and 18 to make contact, by means of the tracers 35, with the half sole shapes 8 and 9 and to consequently move the mills 34 to the appropriate axial position to the sides of the upper 10.

The actuation of the pistons 32 pushes the sliders 31 to move the mills 34 into contact with the lateral profile of the upper 10.

The subsequent actuation of the toothed belts 24 and of the mills 34 provides the abrasion of the entire profile to be roughed.

After the roughing operation, the rotation of the molding machine 3 moves the half sole shapes 8 and 9 to the second component 37 of the machine and therefore to the tubular element 40, which is lowered so as to allow the meshing of the rack 48 with the pinion 6.

At this point the actuation of the fluid-actuated piston 50 opens the half sole shapes 8 and 9 which are upturned by the translational motion of the rack 48.

From what has been described above it is therefore evident that the machine according to the invention has achieved the intended aim and objects.

By means of said machine it is in fact possible to replace current manual roughing operation with automatic operations.

This entails a considerable improvement in the result of the roughing operation and consequently a considerable reduction in the number of rejects.

The presence of the machine naturally also entails a reduction in personnel assigned to the production of the items of footwear and therefore an increase in productivity.

The invention thus conceived is susceptible to numerous modifications and variations, all of which are within the scope of the inventive concept.

All the details may furthermore be replaced with other technically equivalent elements.

In practice, the materials employed, so long as they are compatible with the contingent use, as well as the dimensions, may be any according to the requirements.

Where technical features mentioned in any claim are followed by reference signs, those reference signs have been included for the sole purpose of increasing the intelligibility of the claims and accordingly such reference signs do not have any limiting effect on the scope of each element identified by way of example by such reference signs.

## Claims

1. Machine (1) for the roughing of uppers (10) for items of footwear before the operation of injection-molding the sole, characterized in that it comprises overturning means suitable for enclosing said upper fitted on the last (4), leaving free the lower region and the region of the lateral profile to be roughed, and at least one pair of tracer mills (34) rigidly associated to a movable support which can be moved away from and toward said upper, said mills (34) being rigidly associated with guiding and translation means suitable for making them abrade in combination the entire profile to be roughed.

2. Machine according to claim 1, characterized in that said overturning means suitable for enclosing said upper comprise a mask (7) which is substantially composed of two members defined by halves of a sole shape (8,9) which correspond to those of the mold, said mask (7) being rigidly associated with a pivot (5) which is rotationally coupled to a support (2) which is fixed on the molding machine (3) at each last (4).

3. Machine according to claims 1 and 2, characterized in that said two half sole shapes (8,9) are pivoted on said pivot (5) and can rotate in a plane which is parallel to the axis of said pivot (5) from a closed position, suitable for internally enclosing an upper (10) fitted on the corresponding last (4), to an open position, for the release of said upper (10), the ends of said two half sole shapes (8,9) which are opposite to the articulation ends being associated with an opening device (11) which is provided with a manual closure lever (12) on one side and with a release lever (13) on the other side, the opening of said half sole shapes (8,9) occurring automatically, after release, due to the action of a spring.

4. Machine according to one or more of the preceding claims, characterized in that said support of said tracer mills (34) is constituted by a metal frame (16) which is substantially parallelepipedal and is articulated, with its end, to an upper axis (15) of a metal base (14) which is fixed with respect to the molding machine (3), two roughing carriages (17,18) which bear said tracer mills (34) being slidably coupled inside said frame so as to move in a direction which is parallel to the median plane of said last (4), in an arrangement which is substantially orthogonal to the position of said half sole shapes (8,9) closed around the upper (10), at the two sides of said upper.

5. Machine according to one or more of the preceding claims, characterized in that each roughing carriage (17,18) comprises a shaft (19) which is substantially orthogonal to said half sole shapes (8,9), a block (20) being slidably associated with said shaft (19) and being pushed downward by a spring (21) which surrounds the upper portion of said shaft, said block (20) being rigidly associated so as to slide orthogonally with respect to a lower guide (22) which is orthogonal thereto and in turn is rigidly associated with an element (23) which is substantially parallel to said block and is fixed to a toothed guiding and translation belt (24).

6. Machine according to one or more of the preceding claims, characterized in that said toothed belt (24) is stretched between two pinions (25,26), one of which is actuated by a motor (27) with a reduction gear (28) which are arranged above said frame (16), said belt, appropriately kept under tension by two belt tighteners (29,30), being arranged so as to allow the translational motion of said carriages (17,18).

7. Machine according to one or more of the preceding claims, characterized in that a slider (31) is slidable on said guide (22) which is orthogonal to said block (20) and is actuated by a fluid-actuated piston (32) which is parallel thereto and is rigidly associated between two arms (33) thereof and said block (20), a support (33a) being fixed on said slider (31), said support bearing, beneath it, one of said mills (34) which rotates on an axis which is substantially orthogonal to said half sole shapes (8,9), a tracer (35) being arranged to the side of said mill, said tracer having a related rotary bearing (36) adapted to abut and roll along the surface of said half sole shapes (8,9).

8. Machine according to one or more of the preceding claims, characterized in that it comprises a base (38) which is fixed with respect to the molding machine (3), the end of a tubular metal element (40) being articulated to an upper axis (39) of said base (38), the stem (41) of a fluid-actuated piston (42) being slidable inside said tubular element (40), said piston (42) being coaxial with respect to said tubular element (40) and being arranged on the opposite side thereof with respect to said axis (39), the articulation of said tubular element (40) being provided by means of a lever system (43) actuated by a fluid-actuated piston.

9. Machine according to one or more of the preceding claims, characterized in that said tubular element (40) has two pairs of slotted holes (44,45) in which bolt elements (46,47) are guided and rigidly couple to said stem (41) a rack (48) which is arranged flanking said tubular element (40) and has its teeth directed downward, said rack (48) being adapted to mesh, after a downward rotation of said tubular element (40), with a pinion (6) which is rigidly associated with said pivot (5) which bears said half sole shapes (8,9).

10. Machine according to one or more of the preceding claims, characterized in that a fluid-actuated piston (49) is fixed on said base (38) which bears said tubular element (40) with rack (48), the end of the stem (50) of said piston (49) being adapted to release said lever (13) provided in the device (11) for opening said half sole shapes (8,9).

Fig. 2

Fig. 1

Fig. 4

Fig. 3

7

Fig. 5

Fig. 6

Fig. 9

Fig. 8

Fig. 7